# EUROPÄISCHE PATENTSCHRIFT

(11) **EP 2 427 654 B1**
(45) Veröffentlichungstag und Bekanntmachung des Hinweises auf die Patenterteilung: **04.05.2016**
(21) Anmeldenummer: 10718579.5
(22) Anmeldetag: 05.05.2010
(51) Int. Cl.: F03D 1/00, E04H 12/22

(54) **VERFAHREN ZUM ERRICHTEN EINES TURMES UND TURM**
METHOD FOR ERECTING A TOWER, AND TOWER
PROCÉDÉ POUR ÉRIGER UNE TOUR ET TOUR

(30) Priorität: 05.05.2009 DE 102009019709
(43) Veröffentlichungstag der Anmeldung: 14.03.2012
(73) Patentinhaber: Wobben Properties GmbH, 26607 Aurich (DE)
(72) Erfinder: VOGEL, Markus, 26121 Oldenburg (DE); HOFMANN, Jens, 39175 Biederitz (DE)
(74) Vertreter: Eisenführ Speiser
(86) Internationale Anmeldenummer: PCT/EP2010/056087
(87) Internationale Veröffentlichungsnummer: WO 2010/128075

(56) Entgegenhaltungen:
- EP-A1- 1 767 705
- WO-A1-03/031733
- WO-A1-2008/003749
- WO-A2-2005/107425
- DE-A1-102004 031 655
- US-A- 3 653 169
- US-A- 5 779 388
- US-A1- 2006 137 287
- US-H- H 906

## Beschreibung

Die vorliegende Erfindung betrifft ein Verfahren zum Errichten eines Turmes, insbesondere eines Turmes einer Windenergieanlage, und einen Turm sowie eine Windenergieanlage mit einem solchen Turm.

Bei der Erstellung eines Fundaments für einen Turm muss darauf geachtet werden, dass die Oberseite des Fundaments oder wenigstens derjenige Teil des Fundaments, auf dem der Turm steht, plan und exakt horizontal ausgestaltet ist, damit der Turm genau senkrecht steht.

WO 2005/095717 zeigt eine ringförmige Schalung auf einem Fundament eines Turmes. Die Schalung wird mit einer dünnflüssigen Vergussmasse (einem Vergussmörtel) befüllt und nach dem Abbinden der Vergussmasse und dem Entfernen einer Schalung kann ein Nivellierring bzw. Lastverteilring auf der Oberfläche der abgebundenen Vergussmasse platziert werden. Auf diesem Lastverteilring kann dann ein unteres Turmsegment unter Vermittlung von Ankerschrauben befestigt werden, welche in das Fundament eingearbeitet sind und das Fundament um ein vorgegebenes Maß überragen. Durch die niedrige Viskosität der Vergussmasse kann sichergestellt werden, dass diese sich selbst exakt ausrichtet bzw. nivelliert.

WO 2005/095792 beschreibt ein Verfahren zum Errichten eines Turmes auf einem Fundament. Der Turm wird hierbei unter Vermittlung von Ankerschrauben, die in Segmentankern im Fundament verankert sind, aufgestellt. Die Ankerschrauben ragen ein vorgegebenes Maß über die Oberseite des Fundaments hinaus. Zunächst wird ein Nivellierring bzw. ein Lastverteilring an der Oberseite des Fundaments ausnivelliert, ausgerichtet und fixiert. Diese Nivellierung erfolgt im Stand der Technik z. B. derart, dass an vorgegebenen Positionen des Fundaments Höhenverstelleinheiten wie z. B. Höhenverstellschrauben abgelegt werden, auf denen der Lastverteilring zunächst aufliegt und durch deren Einstellung der Lastverteilring dann ausnivelliert wird. Daran anschließend wird die Fuge zwischen Fundament und Lastverteilring aufgefüllt und der Lastverteilring flächig unterfüttert. Dies geschieht mit einem geeigneten Füllmaterial, wie z. B. Vergussmörtel.

Die Höhenverstellschrauben bestehen aus einem Außenelement mit einem Innengewinde und einem Innenelement mit einem Außengewinde. Mit diesem Außengewinde ist das Innenelement in dem Innengewinde des Außenelements aufgenommen und gegenüber dem Außenelement durch ein- bzw. ausschrauben höhenverstellbar. Durch geeignete Anordnung und Einstellung der Höhenverstellschrauben kann der Lastverteilring nivelliert werden. Um eine gute Witterungsbeständigkeit und einen sicheren, zuverlässigen Lastabtrag zu erreichen, werden solche Höhenverstellschrauben aus Edelstahl hergestellt. Durch die typische Ausbildung des Gewindes als Feingewinde ist eine sehr feine Höhenverstellung möglich.

Derart ausgebildete Höhenverstellschrauben haben zwar einen relativ hohen Preis, können jedoch zuverlässig hohe Lasten abtragen. Für die Nivellierung des Lastverteilringes sind daher wenigstens drei Höhenverstellschrauben erforderlich, die über den mittleren Radius des Lastverteilringes (äquidistant verteilt) angeordnet sind.

DE 103 47 536 A1 zeigt eine Verankerung eines Säulenschwenkkranes. Hierbei wird ein zusammenquetschbares-Distanzelement vorgesehen.

DE 698 27 290 T2 beschreibt eine Vorrichtung zum Einstellen der Neigung der Oberfläche einer Konstruktion auf Stützfüßen.

WO 2008/003749 A1 zeigt eine als Höhenverstellschraube ausgebildete Höhenverstelleinheit zum Ausrichten eines unteren Turmsegments. Die Höhenverstellschraube weistan ihrer Unterseite ein Druckverteilungselement auf, das weich im Vergleich zum Beton des Fundaments ist. Alternativ dazu wird eine Höhenverstelleinheit auch durch zwei ineinander verschiebbare Keile realisiert.

Es ist daher eine Aufgabe der vorliegenden Erfindung, ein Verfahren zum Errichten eines Turmes vorzusehen, welches eine zuverlässigere und kostengünstige Errichtung eines Turms ermöglicht.

Diese Aufgabe wird durch ein Verfahren zum Errichten eines Turmes gemäß Anspruch 1, durch einen Turm gemäß Anspruch 4 und durch eine Windenergieanlage gemäß Anspruch 7 gelöst.

Somit wird ein Verfahren zum Errichten eines Turmes, insbesondere eines Turmes einer Windenergieanlage, angegeben. Hierzu wird ein Fundament bereitgestellt, eine Mehrzahl von Höhenverstelleinheiten wird auf dem Fundament platziert, ein Lastverteilring wird auf der Mehrzahl der Höhenverstelleinheiten platziert. Der Lastverteilring wird durch Einstellen der Höhenverstelleirtheiten ausgerichtet und nivelliert und die Fuge zwischen dem Fundament und dem Lastverteilring wird mit einer Vergussmasse aufgefüllt. Nachdem die Vergussmasse eine vorgegebene Festigkeit erreicht hat bzw. nach dem Aushärten der Vergussmasse wird ein Turmsegment auf dem Lastverteilring platziert. Dabei sind die Höhenverstelleinheiten derart dimensioniert, dass sie (gemeinsam) das Gewicht bzw. die Last des Lastverteilringes zuverlässig aufnehmen können, aber nachgeben, wenn eine derart große Kraft auf eine der Mehrzahl der Höhenverstelleinheiten wirkt, dass eine einen Grenzwert überschreitende Flächenpressung durch die Höhenverstelleinheiten auf das Fundament wirkt (d.h. sie versagen unter einer vorgegebenen Last (Gewicht des Lastverteilringes + zweites Gewicht auf dem Lastverteilring)). Die Höhenverstelleinheiten sind aus Kunststoff hergestellt. Somit können die Höhenverstelleinheiten auf kostengünstige Art und Weise hergestellt werden.

Wenn die Fuge zwischen dem Fundament und dem ausgerichteten Lastverteilring mit Vergussmasse aufgefüllt ist und die Vergussmasse eine vorgegebene Festigkeit erreicht, dann wird ein Großteil der Last (Lastverteilring + Turmsegmente) über die Vergussmasse auf das Fundament abgeleitet werden. Eine Ableitung der Lasten (Lastverteilring + Turmsegmente) über die Höhenverstelleinheiten auf das Fundament erfolgt dann, wenn der Lastverteilring nicht ausreichend durch die Vergussmasse in der Fuge gestützt wird. In einem solchen Fall kann es vorkommen, dass die Höhenverstelleinheiten einen Teil oder die gesamte Last an das Fundament weiterleiten müssen. Dies kann dazu führen, dass in dem Bereich unterhalb der Höhenverstelleinheiten eine Flächenpressung erreicht wird, die zu einer Beschädigung bzw. Zerstörung des Fundaments führen kann.

Dabei liegt der Erfindung die Erkenntnis zu Grunde, dass herkömmliche Höhenverstellschrauben aus Edelstahl aufgrund ihrer höheren Steifigkeit gegenüber dem Vergussmörtel zu einer zu hohen Flächenpressung durch die Höhenverstelleinheiten auf dem Fundament führen können, was zu einer Schädigung des Fundaments führen kann. Diese Last bzw. die damit einhergehende Flächenpressung kann bereits durch das erste Turmsegment erreicht und überschritten werden, wird aber spätestens durch den vollständigen Turm erreicht, d. h. die zu hohe Flächenpressung wird von einer Konzentration des Lastflusses auf die Höhenverstelleinheiten (in Folge der höheren Steifigkeit) verursacht. Eine Erhöhung der Anzahl der bekannten Höhenverstelleinheiten könnte hier zwar generell Abhilfe schaffen, erhöht aber die Kosten, weil die Höhenverstelleinheiten unter dem Lastverteilring bleiben müssen, bis die Fuge ausgehärtet ist, und damit verloren sind. Wenn aber die Höhenverstelleinheiten im Wesentlichen das Gewicht des Lastverteilringes tragen sollen und entsprechend schwächer dimensioniert sind, dann werden sie auf Grund der relativ geringen Steifigkeit unter der Last des Turmes versagen. Folglich liegt der Lastverteilring unter der Last des Turmes auf der ausgehärteten Vergussmasse auf und die gesamte Vergussmassefuge übernimmt den Lastabtrag in das Fundament mit der vorgesehenen Flächenpressung, so dass Beschädigungen des Fundaments verhindert werden.

Wenn die Last bzw. das Gewicht, welches auf die jeweiligen Höhenverstelleinheiten einwirkt, einen Grenzwert überschreitet, dann können Höhenverstelleinheiten aus Kunststoff nachgeben. Dieses Nachgeben kann ein zerstörungsbehaftetes Nachgeben darstellen. Gemäß einem weiteren Aspekt der vorliegenden Erfindung sind die Höhenverstelleinheiten als Höhenverstellschrauben insbesondere mit einem metrischen Gewinde ausgestaltet. Ein metrisches Gewinde ist einfacher und damit kostengünstiger herstellbar, als ein Feingewinde und erlaubt immer noch eine ausreichend genaue Nivellierung. Durch die Ausgestaltung als Schrauben kann eine Höhenverstellung der Höhenverstelleinheiten auf einfache Art und Weise sichergestellt werden.

Die Erfindung betrifft ebenfalls einen Turm, insbesondere einer Windenergieanlage. Der Turm weist ein Fundament, eine Mehrzahl von Höhenverstelleinheiten auf dem Fundament, einen Lastverteilring auf der Mehrzahl der Höhenverstelleinheiten und Vergussmasse in der Fuge zwischen dem Fundament und dem Lastverteilring auf. Die Höhenverstelleinheiten sind dimensioniert, im Wesentlichen das Gewicht des Lastverteilringes aufzunehmen, aber nachgeben, wenn eine derart große Kraft auf eine der Mehrzahl der Höhenverstelleinheiten wirkt, dass eine einen Grenzwert überschreitende Flächenpressung durch die Höhenverstelleinheiten auf das Fundament wirkt.

Die Erfindung betrifft ebenfalls einen Turm, insbesondere einer Windenergieanlage, mit einem Fundament, einer Mehrzahl von Höhenverstelleinheiten auf dem Fundament und einem Lastverteilring auf der Mehrzahl der Höhenverstelleinheiten. Der Lastverteilring dient dazu, ein unteres Turmsegment aufzunehmen. Die Höhenverstelleinheiten werden aus Kunststoff hergestellt.

Die Erfindung betrifft ebenfalls Höhenverstelleinheiten zum Tragen eines Lastverteilringes eines Turms insbesondere.einer Windenergieanlage. Die Höhenverstelleinheiten bestehen hierbei aus Kunststoff.

Die Erfindung betrifft ebenfalls die Verwendung von Höhenverstelleinheiten aus Kunststoff zum Tragen eines Lastverteilringes auf einem Fundament eines Turmes, insbesondere einer Windenergieanlage. Die Höhenverstelleinheiten sind dabei aus Kunststoff ausgestaltet.

Die Erfindung betrifft die Erkenntnis, dass im Stand der Technik Höhenverstellschrauben aus Stahl verwendet werden, um einen Nivellierring bzw. einen Lastverteilungsring auf einem Fundament auszurichten. Anschließend wird die entstandene Fuge beispielsweise mit einer Vergussmasse wie z. B. Pagelzement aufgefüllt. Hierbei kann es jedoch dazu kommen, dass die Last des Turmes, welche auf den Lastverteilungsring wirkt, aufgrund von Ungenauigkeiten in der Fuge durch die Höhenverstellschrauben abgeleitet wird. Daher kann es dazu kommen, dass der Beton des Fundaments unter den Höhenverstellschrauben die gesamte Last des Turmes aufnehmen muss. Somit kann es zu einer unzulässig hohen Flächenpressung des Fundaments im Bereich unter den Höhenverstellschrauben kommen. Dies ist insbesondere nachteilig, wenn die Flächenpressung unzulässig hohe Werte erreicht, da dies zu Schäden an dem Fundament führen kann. Anstelle einer gleichmäßigen Lastverteilung auf dem Fundament kommt es aufgrund der Höhenverstellschrauben gemäß dem Stand der Technik dazu, dass der Lastfluss sich auf einige wenige Stellen konzentriert.

Erfindungsgemäß sind also Höhenverstelleinheiten vorgesehen, welche zwar das Gewicht des Lastverteilringes sicher tragen können, nicht jedoch das Gewicht des ganzen Turmes oder das Gewicht eines einzelnen Turmsegments. Beim Aufbau des Turms werden die Höhenverstelleinheiten somit zwangsläufig versagen. Dadurch verteilt sich die Last des Turmes gleichmäßig auf die Vergussmassefuge und durch diese auf das Fundament. Die Höhenverstelleinheiten sind erfindungsgemäß also derart ausgelegt, dass sie zwar das Gewicht des Lastverteilringes tragen können, aber bei einer Flächenpressung, die einen vorbestimmten Grenzwert überschreitet, versagen, d.h. das Versagen der Höhenverstelleinheiten ab einem Grenzwert beispielsweise für die Last oder die Flächenpressung wird billigend in Kauf genommen bzw. ist sogar erwünscht.

Da die Höhenverstelleinheiten beispielsweise in Form von Kunststoff-Höhenverstellschrauben verwendet werden können, kann das Fundament billiger vorgesehen werden, da die Höhenverstellschrauben nicht wiederverwendet werden können und die Kunststoff-Höhenverstellschrauben wesentlich günstiger hergestellt sein können als die ansonsten üblichen Stahlhöhenverstellschrauben.

Weitere Ausgestaltungen der Erfindung sind Gegenstand der Unteransprüche.

Ausführungsbeispiele und Vorteile der Erfindung werden nachstehend unter Bezugnahme auf die Zeichnung näher erläutert.
- Fig. 1: zeigt eine schematische Darstellung eines Ausschnitts eines Fundaments und eines unteren Segmentes eines Turmes gemäß einem ersten Ausführungsbeispiel, und
- Fig. 2: zeigt einen schematischen Querschnitt einer Höhenverstelleinheit gemäß einem zweiten Ausführungsbeispiel,
- Fig. 3A und 3B: zeigen einen schematischen Querschnitt einer Höhenverstelleinheit gemäß einem dritten Ausführungsbeispiel, und
- Fig. 4A und 4B: zeigen einen schematischen Querschnitt einer Höhenverstelleinheit gemäß einem vierten Ausführungsbeispiel.

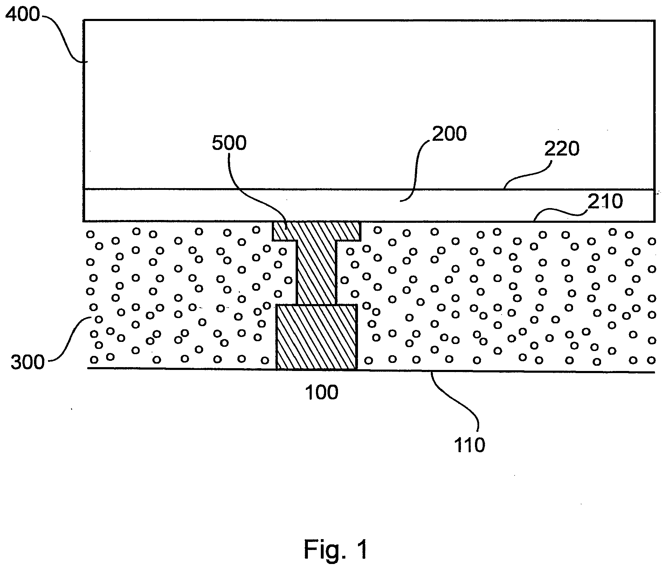

Fig. 1 zeigt eine schematische Darstellung eines Ausschnitts eines Fundaments und eines unteren Segmentes eines Turmes, insbesondere eines Turms einer Windenergieanlage gemäß einem ersten Ausführungsbeispiel. Auf einem Fundament 100 werden eine Mehrzahl von Höhenverstelleinheiten 500 platziert und auf den Höhenverstelleinheiten 500 wird wiederum ein Nivellierring bzw. Lastverteilring 200 platziert. Mittels der Höhenverstelleinheiten 500 kann der Lastverteilring 200 exakt nivelliert bzw. ausgerichtet werden. In der Fuge zwischen der Oberseite 110 des Fundaments 100 und der Unterseite 110 des Lastverteilringes 200 wird Vergussmasse (ein sogenannter Vergussmörtel) 300, eingebracht. Hierbei sollte der Lastverteilring 200 vollständig und ohne Lufteinschlüsse oder Hohlräume unterfüttert werden, damit die auf den Lastverteilring wirkende Last des Turmes auf der gesamten Fläche der Vergussmasse an das Fundament 100 weitergegeben werden kann. Mit anderen Worten, es sollte kein Zwischenraum mehr vorhanden sein zwischen der Vergussmasse 300 und der Oberseite 110 des Fundaments 100 sowie der Unterseite 210 des Nivellierringes 200

Auf dem Lastverteilring 200 kann ein unteres Turmsegment 400 platziert und befestigt werden. Ggf. können zwischen dem Lastverteilring 200 und dem unteren Turmsegment 400 weitere Befestigungselemente vorgesehen werden.

Wenn nach Aushärten der Vergussmasse 300 ein unteres Turmsegment 400 auf dem Lastverteilring 200 befestigt wird oder wenn weitere Turmsegmente auf dem unteren Turmsegment 400 befestigt werden, dann steigt das Gewicht bzw. die Last, welche auf die Vergussmassefuge und die Höhenverstelleinheiten 500 wirkt. Hierbei kann es dazu kommen, dass die Vergussmassefuge 300 arbeitet und komprimiert wird. Wenn die Vergussmassefuge wegen der geringeren Steifigkeit jedoch stärker komprimiert wird als die Höhenverstelleinheit 500, dann kann es dazu-kommen, dass der Kraft- bzw. Lastfluss von dem Lastverteilring 200 auf das Fundament 100 nicht mehr über die Vergussmassefuge 300, sondern (im Wesentlichen) über zumindest einige der Höhenverstelleinheiten 500 erfolgt (wie es bei den Höhenverstellschrauben aus Edelstahl gemäß dem Stand der Technik der Fall ist). Wenn sich jedoch die Lastverteilung auf die Höhenverstelleinheiten 500 konzentriert, dann kann eine Flächenpressung auf das Fundament unterhalb der Höhenverstelleinheiten 500 ausgeübt werden, welche den zulässigen Grenzwert überschreitet, so dass das Fundament unterhalb der Höhenverstelleinheit 500 beschädigt werden kann.

Die Höhenverstelleinheiten 500 sind vorzugsweise als Höhenverstellschrauben ausgestaltet und können beispielsweise aus Kunststoff (HDPE) hergestellt werden. Hierbei werden die Höhenverstelleinheiten derart ausgelegt, dass sie zwar dazu in der Lage sind, das Gewicht des Lastverteilringes 200 zuverlässig aufzunehmen, aber bei Erreichen eines Grenzwertes einer Last oder einer Flächenpressung, d. h. wenn z. B. ein Turmsegment auf dem Lastverteilring platziert wird, versagen bzw. nachgeben oder zumindest beschädigt werden. Hierbei kann es dazu kommen, dass der Lastfluss über die Höhenverstellschrauben nicht mehr stattfinden kann. Da jedoch die Vergussmasse bzw. die Vergussmassefuge 300 zwischen der Oberseite 110 des Fundamentes und der Unterseite 210 des Lastverteilringes 200 vorgesehen sind, kann die Last des Turmes durch diese Vergussmassefuge 300 gleichmäßig aufgenommen und mit der vorgesehenen und für das Fundament unschädlichen Flächenpressung in das Fundament 100 abgeleitet werden.

Die oben beschriebene Dimensionierung bzw. Auslegung der Höhenverstelleinheiten 500 wird daher so gewählt, dass ein Zusammenbruch bzw. ein Versagen der Höhenverstelleinheiten 500 billigend in Kauf genommen wird bzw. durch deren Auslegung vorsätzlich herbeigeführt wird, um eine unzulässig hohe Flächenpressung im Bereich des Fundaments unterhalb der Höhenverstelleinheiten 500 wie im Stand der Technik zu vermeiden. Dabei ist natürlich eine standardisierte Dimensionierung möglich, so dass eine erfindungsgemäße Höhenverstelleinheit 500 z. B. ein Gewicht von bis zu z. B. 350 kg zuverlässig tragen kann. Das Gewicht des Lastverteilrings bestimmt dann die erforderliche Anzahl der Höhenverstelleinheiten 500 für diesen Lastverteilring 200, wobei allerdings stets wenigstens drei Höhenverstelleinheiten 500 verwendet werden, um eine stabile Lage des Lastverteilrings zu gewährleisten. Mit drei Höhenverstelleinheiten 500 könnte bei der Tragkraft von 350 kg durchaus ein Lastverteilring von 1t Gewicht nivelliert werden. Als Material für die Höhenverstelleinheit kann beispielsweise HD-Polyethylen oder ein anderer vorzugsweise thermoplastischer bzw. spritzgießfähiger Kunststoff verwendet werden.

Die Ausgestaltung der Höhenverstelleinheiten 500 als Höhenverstellschrauben aus Kunststoff ist ferner vorteilhaft im Hinblick auf die Materialkosten der Höhenverstelleinheiten 500. Da die Höhenverstelleinheiten 500 nach Auffüllen der Vergussmassefuge nicht mehr entfernt werden können, können sie somit auch nicht wiederverwendet werden.

Mit den Höhenverstelleinheiten 500 gemäß der Erfindung kann eine verbesserte Lastverteilung auf das Fundament 100 des Turmes bei teilweise Versagen der Vergussmassefuge erreicht werden und ferner kann eine Reduzierung der Kosten für das Fundament 100 bzw. die Höhenverstelleinheiten 500 erreicht werden. Dabei kann die Höhenverstelleinheit 500 als Höhenverstellschraube mit einem metrischen Gewinde implementiert werden.

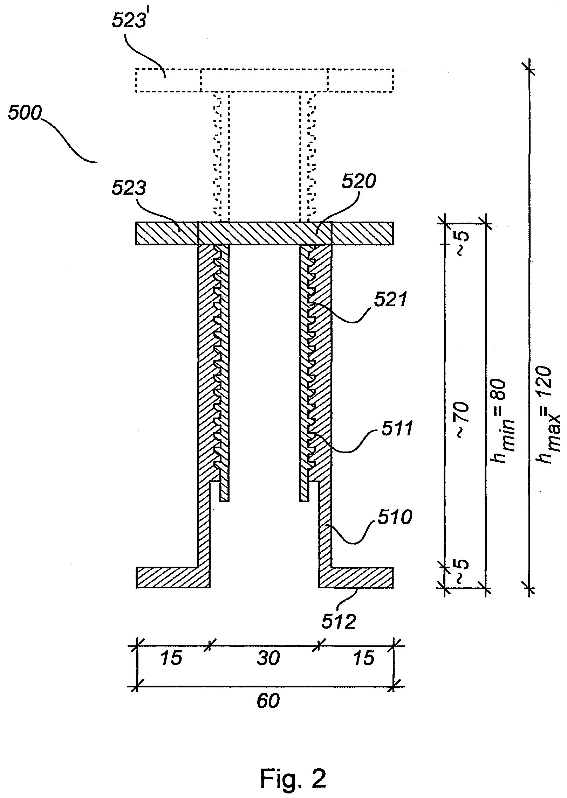

Fig. 2 zeigt eine schematische Schnittansicht einer Höhenverstelleinheit gemäß einem zweiten Ausführungsbeispiel. Die Höhenverstelleinheit 500 gemäß dem zweiten Ausführungsbeispiel kann beispielsweise als Höhenverstelleinheit in dem ersten Ausführungsbeispiel verwendet werden. Die Höhenverstelleinheit 500 ist vorzugsweise als eine Höhenverstellschraube ausgestaltet. Dabei weist die Höhenverstelleinheit 500 ein Außenelement 510 und ein Innenelement 520 auf. Das Außenelement 510 weist Füße 512 oder alternativ an Stelle der Füße 512 einen (nicht dargestellten) Sockelring oder weiterhin alternativ eine (ebenfalls nicht dargestellte) Sockelplatte sowie ein Innengewinde 511 auf. Das Innenelement 520 weist ein Außengewinde 521 und ein oberes Element 523 auf. Dieses obere Element 523 ist in der Figur gestrichelt in einer höheren Position dargestellt, in die es durch ausschrauben gebracht werden kann. In dieser Position ist das obere Element mit dem Bezugszeichen 523' bezeichnet. Das Außengewinde 521 des Innenelements 520 ist dabei natürlich komplementär zu dem Innengewinde 511 des Außenelements 510.

Die Füße 512 bzw. der (nicht dargestellte) Sockelring oder die (ebenfalls nicht dargestellte) Sockelplatte werden auf der Oberfläche 110 des Fundaments 100 platziert und leiten den Lastfluss in das Fundament ein, während das obere Element 523, 523' dazu dient, den Lastverteilring 200 aufzunehmen. Durch Drehen des inneren Elementes 520 kann die Höhe der Höhenverstelleinheit eingestellt werden. Hierbei kann die Höhe beispielsweise zwischen 80 und 120 mm eingestellt werden. Selbstverständlich sind abhängig von der konstruktiven Ausführung der Höhenverstelleinheit auch andere-Bereiche, wie z. B. 50 bis 90 mm möglich.

Das obere Element 523, 523' des Innenelements 520 kann polygonal ausgebildet sein, sodass die Höhenverstellschraube auch in situ, also in der Einbaulage unterhalb des Lastverteilrings 200 (in dieser Figur nicht dargestellt), durch ein geeignetes Werkzeug wie z. B. einen Maulschlüssel bzw. Gabelschlüssel betätigt werden kann, um die Nivellierung des Lastverteilrings 200 auf einfache Weise zu ermöglichen.

Ein Versagen oder Nachgeben der Höhenverstelleinheiten gemäß dem ersten oder zweiten Ausführungsbeispiel unter einem Gewicht bzw. einer Last oberhalb eines Grenzwertes (bzw. einer Flächenpressung oberhalb des Grenzwertes) betrifft eine Beschädigung, Beeinträchtigung und/oder eine Zerstörung der Höhenverstelleinheiten, insbesondere der Höhenverstellschrauben. Hierbei können beispielsweise die Gewinde der Höhenverstellschrauben beschädigt werden, was zu einem Versagen der Funktion oder einem Nachgeben der Höhenverstellschrauben führen kann.

Die erfindungsgemäße Höhenverstelleinheit kann z. B. eine maximale Belastung von 0,5 - 0,7 t tragen. Eine Lastverteilung kann z. B. ein Gewicht von 900 kg bis 4000 kg (in Abhängigkeit von einer Turmvariante) aufweisen.

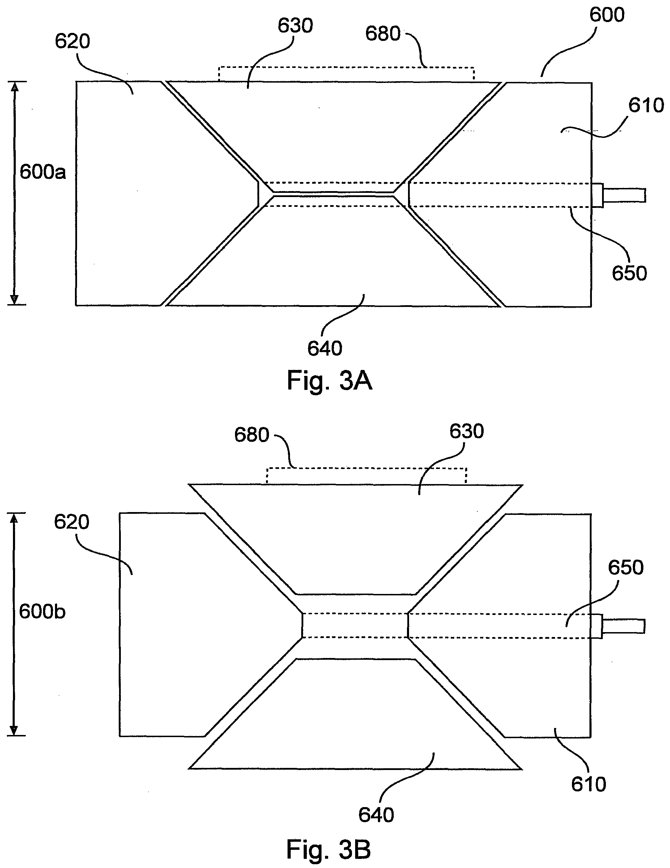

Fig. 3A und 3B zeigen jeweils einen schematischen Querschnitt einer Höhenverstelleinheit gemäß einem dritten Ausführungsbeispiel. In Fig. 3A ist die Höhenverstelleinheit 600 mit einer ersten Höhe 600a gezeigt. Diese Höhe stellt die minimale Höhe der Höhenverstelleinheit 600 dar. Die Höhenverstelleinheit 600 gemäß dem dritten Ausführungsbeispiel weist einen ersten und zweiten im Querschnitt trapezförmigen Abschnitt (Trapezabschnitt) 630, 640 auf, welche jeweils mit ihren kleineren Seiten gegenüberliegend angeordnet sind. Die Höhenverstelleinheit 600 weist ferner einen ersten und zweiten Keilabschnitt 610, 620 auf. Der erste und zweite Keilabschnitt 610, 620 greifen jeweils in den ersten und zweiten trapezförmigen Abschnitt 630, 640 ein. Die Höhenverstelleinheit 600 gemäß dem dritten Ausführungsbeispiel weist ferner eine Verstelleinheit 650 auf, mittels welcher der Abstand zwischen dem ersten und zweiten Keilabschnitt 610, 620 eingestellt werden kann.

In Fig. 3B ist eine Situation gezeigt, wo die beiden Keilabschnitte 610, 620 mittels der Verstelleinheit 650 näher aneinander vorgesehen sind, d. h. der Abschnitt zwischen dem ersten und zweiten Keilabschnitt 610, 620 wurde verringert. Durch den verringerten Abstand zwischen dem ersten und zweiten Keilabschnitt 610, 620 werden der erste und zweite Trapezabschnitt 630, 640 nach oben bzw. nach unten gedrückt, so dass die Höhe 600b der Höhenverstelleinheit 600 größer ist als die in Fig. 3A gezeigte minimale Höhe 600a. Somit wird gemäß dem dritten Ausführungsbeispiel eine Höhenverstelleinheit vorgesehen, welche durch Betätigung der Verstelleinheit 650 den Abstand zwischen dem ersten und zweiten Keilabschnitt 610, 620 variieren kann und somit den ersten und zweiten Trapezabschnitt 630, 640 nach oben bzw. nach unten drücken kann, so dass die Höhe der Höhenverstelleinheit 600 vergrößert bzw. verkleinert werden kann.

Die Höhenverstelleinheit 600 gemäß dem dritten Ausführungsbeispiel mit dem ersten und zweiten Keilabschnitt 610, 620 und dem ersten und zweiten Trapezabschnitt 630, 640 wird aus Kunststoff hergestellt.

Damit kann die Höhenverstelleinheit gemäß dem dritten Ausführungsbeispiel wie die Höhenverstelleinheit gemäß dem ersten oder zweiten Ausführungsbeispiel unter einem Gewicht bzw. einer Last oberhalb eines Grenzwertes nachgeben. Dieses Nachgeben kann ein zerstörungsbehaftetes Nachgeben sein.

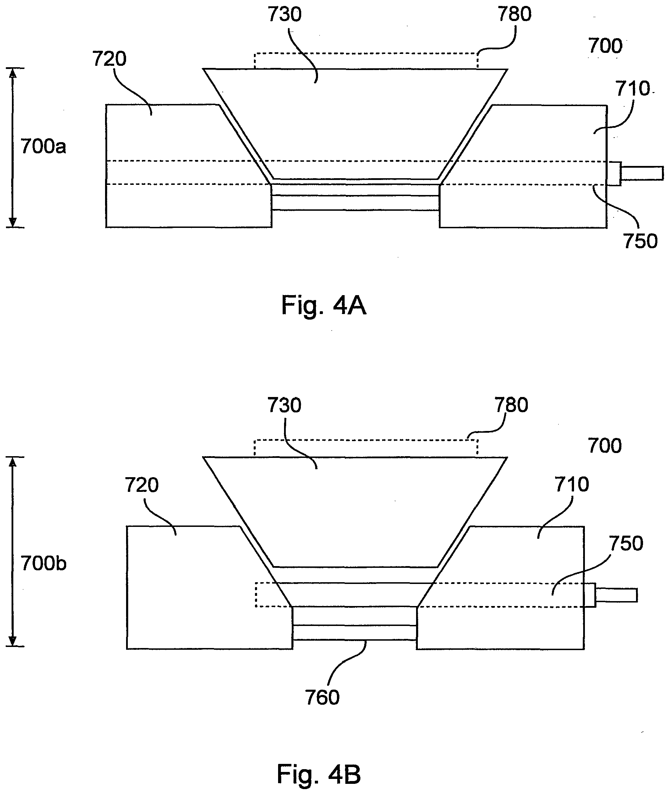

Fig. 4A und 4B zeigen jeweils einen schematischen Querschnitt einer Höhenverstelleinheit gemäß einem vierten Ausführungsbeispiel. Die Höhenverstelleinheit 700 gemäß dem vierten Ausführungsbeispiel weist einen ersten trapezförmigen Abschnitt bzw. Trapezabschnitt 730 sowie einen ersten und zweiten Keilabschnitt 710, 720 auf. Der erste und zweite Keilabschnitt 710, 720 kann über eine Verstelleinheit 750 derart miteinander verbunden sein, dass der Abtand zwischen dem ersten und zweiten Keilabschnitt 710, 720 variierbar ist. In Fig. 4A ist eine Höhe 700a der Höhenverstelleinheit gezeigt, welche der minimalen Höhe entspricht.

In Fig. 4B ist die Höhenverstelleinheit gemäß dem vierten Ausführungsbeispiel gezeigt, wobei der Abstand zwischen den beiden Keilabschnitten 710, 720 im Vergleich zu dem in Fig. 4A gezeigten Abstand verringert worden ist. Somit wird der trapezförmige Abschnitt 730 durch den ersten und zweiten Keilabschnitt 710, 720 nach oben gedrückt, so dass die Höhe 700b der Höhenverstelleinheit 700 vergrößert wird.

Die Höhenverstelleinheit gemäß dem vierten Ausführungsbeispiel kann ebenfalls wie die Höhenverstelleinheit gemäß dem ersten, zweiten oder dritten Ausführungsbeispiel nachgeben, wenn ein Grenzwert einer Last bzw. eines Gewichts überschritten wird. Dieses Nachgeben kann ebenfalls ein zerstörungsbehaftetes Nachgeben darstellen.

Die Verstelleinheit gemäß dem dritten und vierten Ausführungsbeispiel kann als Schraubenelement ausgestaltet sein.

## Patentansprüche

1. Verfahren zum Errichten eines Turms, insbesondere eines Turms einer Windenergleanlage, mit den Schritten
Bereitstellen eines Fundaments (100),
Platzieren einer Mehrzahl von Höhenverstelleinheiten (500) auf dem Fundament (100),
Platzieren eines Lastverteilringes (200) auf der Mehrzahl der Höhenverstelleinheiten (500),
Ausrichten und Nivellieren des Lastvertellringes (200) durch Einstellen der Höhenverstelleinheiten (500), und
Auffüllen einer Fuge zwischen dem Fundament (100) und dem Lastverteilring (200) mit einer Vergussmasse (300),
Platzieren eines Turmsegments (400) des Turms auf dem Lastverteilring (200), nachdem die Vorgusamasse eine vorgegebene Festigkeit erreicht hat,
**dadurch gekennzeichnet, dass** die Höhenverstelleinheiten (500) derart dimensioniert sind, dass sie gemeinsam das Gewicht des Lastverteilringes (200) tragen können, aber nachgeben, wenn eine derart große Kraft auf eine der Mehrzahl der Höhenverstelleinheiten wirkt, dass eine einen Grenzwert überschreitende Flächenpressung durch die Höhenverstelleinheiten auf das Fundament wirkt.
wobei die Höhenverstelleinhelten (500) aus Kunststoff hergestellt sind,

2. Verfahren nach Anspruch 1, wobei die Höhenverstelleinheiten (500) in Form von Höhenverstellschrauben, insbesondere mit einem metrischen Gewinde, verwendet werden.

3. Verfahren nach Anspruch 1 oder 2, wobei die Höhenverstelleinheiten (600, 700) einen ersten und zweiten Keilabschnitt (610, 620; 710, 720) aufweisen, welche durch eine Verstelleinheit (650, 750) in ihrem Abstand varllert werden können, wobei ein Trapezabschnitt (630, 640; 730, 740) mit dem ersten und zweiten Keilabschnitt derart zusammenwirkt, dass die Höhe der Höhenverstelleinhelt variiert wird.

4. Turm, insbesondere einer Windenergieanlage, mit
einem Fundament (100),
einer Mehrzahl von Höhenverstelleinheiten (600) auf dem Fundament (100).
einem Lastverteilring (200), welcher auf der Mehrzahl der Höhenverstelleinheiten (500) platziert ist.
einer Vergussmasse (300) in einer Fuge zwischen dem Fundament (100) und dem Lastverteilring (200), und
mindestens einem Turmsegment (400) auf dem Lastverteilring (200),
**dadurch gekennzeichnet, dass** die Höhenverstelleinheiten (500) derart dimensioniert sind, gemeinsam das Gewicht des Lastverteilringas (200) tragen zu können, aber nachgeben, wenn eine derart große Kraft auf eine der Mehrzahl der Höhenverstelleinheiten wirkt, dass eine einen Grenzwert überschreitende Flächenpressung durch die Höhenverstelleinheiten auf das Fundament wirkt,
wobei die Höhenverstelleinheiten (500) aus Kunststoff hergestellt sind.

5. Turm nach Anspruch 4, **gekennzeichnet durch** als Höhenverstellschrauben, insbesondere mit einem metrischen Gewinde, ausgebildete Höhenverstelleinlheiten (500).

6. Turm nach Anspruch 4 oder 5, wobei die Höhenverstelleinheit einen ersten und zweiten Keilabschnitt (610, 620; 710, 720), eine Verstelleinheit (650, 750) zum Verstellen des Abstandes zwischen dem ersten und zweiten Kellabschnitt (610, 620; 710, 720) und mindestens einen Trepezabschgitt (630, 640; 730, 740) aufweist, wobei die Höhe der Höhenverstellelnheit durch die Variation des Abstandes zwischen dem ersten und zweiten keilförmigen Abschnitt einstellbar ist.

7. Windenergieanlage mit einem Turm nach einem der Ansprüche 4 bis 6.

8. Höhenverstelleinhelten (500) zum Tragen eines Lastverteilringes (200) eines Turms einer Windenergieanlage, wobei
die Höhenverstelleinheiten (500) aus Kunststoff bestehen und derart dimensioniert sind, dass sie gemeinsam das Gewicht des Lastverteilringes (200) tragen können, aber nachgeben, wenn eine derart große Kraft auf eine der Mehrzahl der Höhenverstelleinheiten wirkt, dass eine einen Grenzwert überschreitende Flächenpressung durch die Höhenverslellelnhelten auf das Fundament wirkt.

9. Verwendung von Höhenverstelleinheiten (500) aus Kunststoff zum Tragen eines Lastverteilringes eines Turmes einer Windenergieanlage, wobei auf dem Lastverteilring mindestens ein Turmsegment (400) eines Turmes platziert wird,
wobei die Höhenverstelleinheiten derart dimensioniert sind, dass sie gemeinsam das Gewicht des Lastverteilringes (200) tragen können, aber nachgeben, wenn eine derart große Kraft auf eine der Mehrzahl der Höhenverstelleinheiten wirkt, dass eine einen Grenzwert überschreitende Flächenpressung durch die Höhenverstelleinheiten auf das Fundament wirkt.

## Claims

1. Method for erecting a tower, in particular a tower of a wind turbine, having the steps of:
providing a foundation (100),
placing a plurality of height adjustment units (500) on the foundation (100),
placing a load distribution ring (200) on the plurality of height adjustment units (500),
orientating and levelling the load distribution ring (200) by adjusting the height adjustment units (500), and
filling a joint between the foundation (100) and the load distribution ring (200) with a casting compound (300),
placing a tower segment (400) of the tower on the load distribution ring (200) after the casting compound has reached a predetermined degree of strength,
**characterised in that** the height adjustment units (500) are sized in such a manner that together they can carry the weight of the load distribution ring (200) but give way when such a large force acts on one of the plurality of the height adjustment units that a surface pressure which exceeds a limit value acts on the foundation as a result of the height adjustment units,
wherein the height adjustment units (500) are produced from plastics material.

2. Method according to claim 1, wherein the height adjustment units (500) are used in the form of height adjustment screws, in particular with a metric thread.

3. Method according to claim 1 or claim 2, wherein the height adjustment units (600, 700) have a first and a second wedge portion (610, 620; 710, 720) which can be varied in terms of the spacing thereof by means of an adjustment unit (650, 750), wherein a trapezoidal portion (630, 640; 730, 740) cooperates with the first and second wedge portions in such a manner that the height of the height adjustment unit is varied.

4. Tower, in particular a wind turbine, having
a foundation (100),
a plurality of height adjustment units (600) on the foundation (100),
a load distribution ring (200) which is placed on the plurality of height adjustment units (500),
a cast mass (300) in a joint between the foundation (100) and the load distribution ring (200), and
at least one tower segment (400) on the load distribution ring (200),
**characterised in that** the height adjustment units (500) are sized in such a manner that together they can carry the weight of the load distribution ring (200), but give way when such a large force acts on one of the plurality of the height adjustment units that a surface pressure which exceeds a limit value acts on the foundation as a result of the height adjustment units,
wherein the height adjustment units (500) are produced from plastics material.

5. Tower according to claim 4, **characterised by** height adjustment units (500) which are constructed as height adjustment screws, in particular with a metric thread.

6. Tower according to claim 4 or claim 5, wherein the height adjustment unit has a first and a second wedge portion (610, 620; 710, 720), an adjustment unit (650, 750) for adjusting the spacing between the first and the second wedge portion (610, 620; 710, 720) and at least one trapezoidal portion (630, 640; 730, 740), wherein the height of the height adjustment unit can be adjusted by the variation of the spacing between the first and second wedge-like portions.

7. Wind turbine having a tower according to any one of claims 4 to 6.

8. Height adjustment units (500) for carrying a load distribution ring (200) of a tower of a wind turbine, wherein the height adjustment units (500) comprise plastics material and are sized in such a manner that together they can carry the weight of the load distribution ring (200), but give way when such a large force acts on one of the plurality of the height adjustment units that a surface pressure which exceeds a limit value acts on the foundation as a result of the height adjustment units.

9. Use of height adjustment units (500) of plastics material for carrying a load distribution ring of a tower of a wind turbine, wherein at least one tower segment (400) of a tower is placed on the load distribution ring,
wherein the height adjustment units are sized in such a manner that together they can carry the weight of the load distribution ring (200), but give way when such a large force acts on one of the plurality of the height adjustment units that a surface pressure which exceeds a limit value acts on the foundation as a result of the height adjustment units.

## Revendications

1. Procédé pour ériger une tour, en particulier une tour d'une éolienne, avec les étapes suivantes :
la mise à disposition d'une fondation (100),
le placement d'une pluralité d'unités de réglage en hauteur (500) sur la fondation (100),
le placement d'un anneau de distribution de charge (200) sur la pluralité des unités de réglage en hauteur (500),
l'orientation et la mise à niveau de l'anneau de distribution de charge (200) par réglage des unités de réglage en hauteur (500) et
le remplissage d'un joint entre la fondation (100) et l'anneau de distribution de charge (200) avec une masse de scellement (300),
le placement d'un segment de tour (400) de la tour sur l'anneau de distribution de charge (200) après que la masse de scellement a atteint une résistance prescrite,
**caractérisé en ce que** les unités de réglage en hauteur (500) sont dimensionnées de telle manière qu'elles puissent supporter ensemble le poids de l'anneau de distribution de charge (200) mais cèdent si une force si grande agit sur l'une de la pluralité des unités de réglage en hauteur qu'un pressage de surface dépassant une valeur limite agisse par les unités de réglage en hauteur sur la fondation,
les unités de réglage en hauteur (500) étant fabriquées en plastique.

2. Procédé selon la revendication 1, les unités de réglage en hauteur (500) étant utilisées sous la forme de vis de réglage en hauteur, en particulier avec un filet métrique.

3. Procédé selon la revendication 1 ou 2, les unités de réglage en hauteur (600, 700) présentant des première et seconde sections de coin (610, 620 ; 710, 720), dont la distance peut être variée par une unité de réglage (650, 750), une section de trapèze (630, 640 ; 730, 740) coopérant avec les première et seconde sections de coin de telle manière que la hauteur de l'unité de réglage en hauteur soit variée.

4. Tour, en particulier éolienne, avec
une fondation (100),
une pluralité d'unités de réglage en hauteur (600) sur la fondation (100),
un anneau de distribution de charge (200) qui est placé sur la pluralité des unités de réglage en hauteur (500),
une masse de scellement (300) dans un joint entre la fondation (100) et l'anneau de distribution de charge (200) et
au moins un segment de tour (400) sur l'anneau de distribution de charge (200),
**caractérisée en ce que** les unités de réglage en hauteur (500) sont dimensionnées de manière à pouvoir supporter ensemble le poids de l'anneau de distribution de charge (200) mais cèdent si une force si grande agit sur l'une de la pluralité des unités de réglage en hauteur qu'un pressage de surface dépassant une valeur limite agisse par les unités de réglage en hauteur sur la fondation,
les unités de réglage en hauteur (500) étant fabriquées en plastique.

5. Tour selon la revendication 4, **caractérisée par** des unités de réglage en hauteur (500) réalisées comme vis de réglage en hauteur, en particulier avec un filet métrique.

6. Tour selon la revendication 4 ou 5, l'unité de réglage en hauteur présentant des première et seconde sections de coin (610, 620 ; 710, 720), une unité de réglage (650, 750) pour le réglage de la distance entre la première et seconde section de coin (610, 620 ; 710, 720) et au moins une section de trapèze (630, 640 ; 730, 740), la hauteur de l'unité de réglage en hauteur étant réglable par la variation de la distance entre la première et seconde section en coin.

7. Eolienne avec une tour selon l'une quelconque des revendications 4 à 6.

8. Unités de réglage en hauteur (500) pour supporter un anneau de distribution de charge (200) d'une tour d'une éolienne,
les unités de réglage en hauteur (500) se composant de plastique et étant dimensionnées de telle manière qu'elles puissent supporter ensemble le poids de l'anneau de distribution de charge (200) mais cèdent si une force si grande agit sur l'une de la pluralité des unités de réglage en hauteur qu'un pressage de surface dépassant une valeur limite agisse par les unités de réglage en hauteur sur la fondation.

9. Utilisation d'unités de réglage en hauteur (500) en plastique pour supporter un anneau de distribution de charge d'une tour d'une éolienne, au moins un segment de tour (400) d'une tour étant placé sur l'anneau de distribution de charge,
les unités de réglage en hauteur étant dimensionnées de telle manière qu'elles puissent supporter ensemble le poids de l'anneau de distribution de charge (200) mais cèdent si une force si grande agit sur l'une de la pluralité des unités de réglage en hauteur qu'un pressage de surface dépassant une valeur limite agisse par les unités de réglage en hauteur sur la fondation.
